# EUROPÄISCHE PATENTSCHRIFT

(11) **EP 2 589 280 B1**
(45) Veröffentlichungstag und Bekanntmachung des Hinweises auf die Patenterteilung: **30.09.2015**
(21) Anmeldenummer: 12401217.0
(22) Anmeldetag: 01.11.2012
(51) Int. Cl.: A01B 15/10

(54) **Pflugkörper mit einem Streichblech**
Plough body with a mouldboard
Corps de charrue avec un versoir de charrue

(30) Priorität: 04.11.2011 DE 102011055031
(43) Veröffentlichungstag der Anmeldung: 08.05.2013
(73) Patentinhaber: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)

(56) Entgegenhaltungen:
- WO-A2-2008/000989
- DE-U1- 8 320 000
- DE-U1-202011 002 801
- US-A- 2 217 888
- US-A- 3 522 851

## Beschreibung

Die Erfindung bezieht sich auf einen Pflugkörper gemäß des Oberbegriffes des Anspruches 1

Ein Pflugkörper mit einem Streichblech der eingangs genannten Art ist aus der EP 1 586 229 B1, der DE 20 2011 002 801 U1, und der US 2 217 888 A bekannt. Bei dem in diesen Dokumenten offenbarten Pflugkörpern sind Streichbleche vorgesehen, die als Vollkörperbleche oder als Einzelstreichblechstreifen ausgebildet sein können und an einem Pflugtragkörper über ein Formelement festgelegt sind, das jeweils mit einer Vollfläche eines Streichbleches zu verkleben ist, wobei das Streichblech eine homogone Einheit sein soll, das nicht durch Schrauben oder dergleichen sonstige Befestigungsmittel geschwächt ist. Das jeweilige Formelement hat zur weiteren Befestigung mit dem Pflugtragkörper jedoch eine Gewindebohrung oder eine in das Formelement eingelassene Senkschraube, so dass dieses mit dem Streichblech über die Schraubverbindung an dem Pflugtragkörper festzulegen ist.

Da ein Streichblech in dem vorderen Bereich, wo das Formelement mit dem Streichblech verklebt ist, einem erhöhten Verschleiß unterliegt, ist dieses in diesem Bereich besonders hart ausgebildet. Da sämtliche das Streichblech mit dem Pflugkörper verbindende Formelemente angeklebt werden müssen, ist die Herstellung mit sämtlich aufgeklebten Formelementen aufwendig und teuer.

Es ist daher Aufgabe der vorliegenden Erfindung, einen Pflugkörper der eingangs genannten Art derart zu verbessern, dass mit möglichst geringem zusätzlichen Aufwand eine vereinfachte Herstellung für die Festlegung des Streichbleches an dem Pflugtragkörper möglich ist. Zudem soll die Montage des Streichbleches an dem Pflugtragkörper einfach sein.

Zur Lösung dieser Aufgabe sind die kennzeichnenden Merkmale des Anspruches 1 vorgesehen.

Damit ist ein Pflugkörper zur Verfügung gestellt, bei dem Vollstreichbleche oder Einzelstreichblechstreifen mit sehr geringem Montageaufwand und damit ausgesprochen schnell mit dem jeweiligen Schnellbefestigungselement werkzeugfrei festzulegen sind, wobei aufgrund der formschlüssigen Halterung des jeweiligen Befestigungsansatzes des Pflugtragkörpers das jeweilige Streichblech in dem Bereich, wo es besonders hart ausgebildet ist, formelementefrei am Pflugtragkörper befestigt werden kann, da diese Verbindung keine Schwächung des Streichbleches darstellt. Damit ist das Streichblech durch das Befestigungselement nicht im vorderen, einem erhöhten Verschleiß unterliegenden Bereich, der besonders hart und spröde ist, geschwächt. In einem von diesem Ort der werkzeugfreien Schnellmontage entfernt liegenden, weniger hart ausgebildeten Bereich kann das Streichblech mit einer üblichen Verbindung, beispielsweise mit einer üblichen Schraubverbindung am Pflugtragkörper befestigt werden.

Das Anschlussteil kann an dem Streichblech angeformt sein. Besonders bevorzugt wird allerdings, wenn das Anschlussteil mittels einer Klebeverbindung in diesem Bereich an dem Streichblech festgelegt ist, das insofern völlig frei von sonstigen Gestaltungen z.B. in Form von Bohrungen zur Aufnahme von Schraubelementen ausgebildet sein kann. Somit kann dieser Bereich des Vollstreichbleches oder eines Einzelstreichblechstreifens in einem Bereich, der einem besonders großen Verschleiß unterliegt, besonders hart und somit verschleißwiderstandsfähig ausgebildet sein. Der hiervon abgelegenere, während der Bodenbearbeitung in Fahrtrichtung hintere Bereich des Vollstreichbleches oder des Einzelstreichblechstreifens kann somit weniger hart und somit elastisch ausgebildet werden, so dass hier eine übliche Schraubverbindung als Befestigungsmittel zur Befestigung am Pflugtragkörper eingesetzt werden kann. Das Vollstreichblech oder der Einzelstreichblechstreifen ist mithin auch weniger bruchgefährdet, da sonstige Schwächungen des Materials durch die Art der Befestigung nicht vorliegen können.

Zweckmäßigerweise besteht das Streichblech aus einem Streichblechhinterteil und einem als auswechselbares Verschleißteil ausgebildeten Streichblechvorderteil. Eine Weiterbildung der Erfindung sieht daher vor, dass das Streichblechvorderteil dazu genutzt wird, um den Befestigungsansatz des Pflugtragkörpers in dem Anschlussteil über die Befestigung des Streichblechvorderteiles zu sichern. Das Streichblechvorderteil greift in eine entsprechende Ausnehmung am Streichblechhinterteil ein, so dass über eine übliche Schraubverbindung des Streichblechvorderteiles mit dem Pflugtragkörper das Streichblechvorderteil am Pflugtragkörper festgelegt ist und dadurch parallel den Pflugtragkörper mit seinem Befestigungsansatz in dem Anschlussteil sichert.

Hinsichtlich weiterer vorteilhafter Ausgestaltungen wird auf weitere Unteransprüche, die nachfolgende Beschreibung und die Zeichnung verwiesen. In der Zeichnung zeigen:
- Fig. 1: ein Ausführungsbeispiel eines Streichbleches in Streifenkörperausbildung, das mit einem auswechselbaren Streichblechvorderteil versehen ist mit einem Ausführungsbeispiel einer Befestigung des Streichbleches an einem Pflugkörper;
- Fig. 2: eine Schnittdarstellung entsprechend der Schnittlinie II-II in Fig. 1;
- Fig. 3: eine alternative Ausführungsvariante eines Ausführungsbeispiels in einer Analogdarstellung wie das Ausführungsbeispiel nach Fig. 1, und
- Fig. 4: eine Schnittdarstellung des Ausführungsbeispiels nach Fig. 3 entsprechend der Schnittlinie IV-IV.

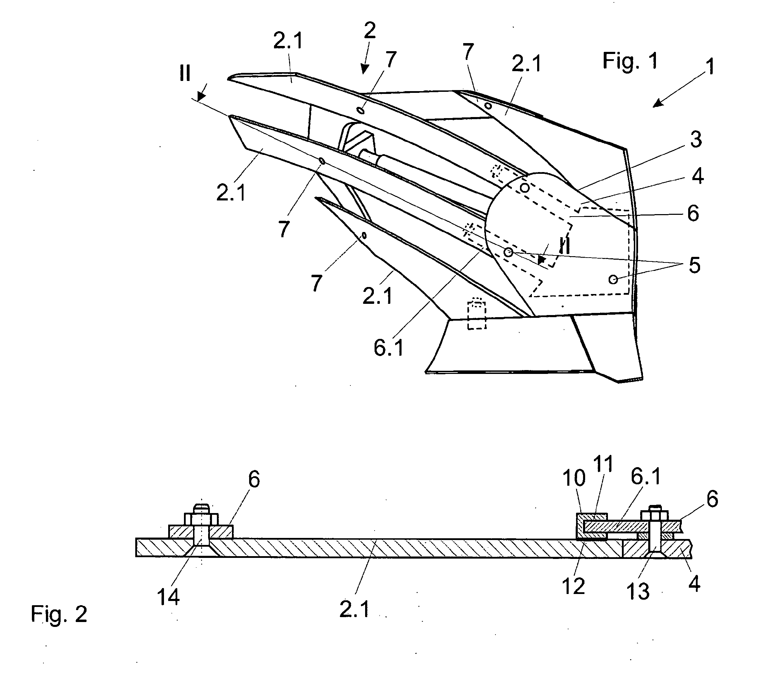

In der Zeichnung sind grundsätzlich übereinstimmende Teile mit übereinstimmenden Ziffern versehen. Allgemein mit 1 ist in den Zeichnungen ein Pflugkörper beziffert, der ein Streichblech 2 aufweist, das in den beiden dargestellten Ausführungsvarianten nach den Fig. 1, 2 und 3, 4 Einzelstreichblechstreifen 2.1 aufweist, die ein Streichblechhinterteil darstellen mit einer Ausnehmung 3, in die ein Streichblechvorderteil 4 als auswechselbares Verschleißteil eingeführt ist. Dieses Streichblechvorderteil 4 ist über Schraubverbindungen 5 an einem gestrichelt angedeuteten Pflugtragkörper 6 befestigt, an dem im Bereich 7 auch die hinteren Bereiche der Einzelstreichblechstreifen 2.1 ebenfalls befestigt sind. An die Einzelstreichblechstreifen 2.1 und das Streichblechvorderteil 4 schließt sich eine Scharspitze 8 und ein Scharblatt 9 an.

Wie näher der Schnittdarstellung nach Fig.2 gemäß der Schnittlinie II-II in Fig. 1 zu entnehmen ist, ist in der Ausführungsvariante gemäß Fig. 1 und Fig. 2 ein Anschlussteil 10 vorgesehen, das im Querschnitt im Wesentlichen U-förmig ausgebildet ist mit einem Aufnahmeraum 11, in die ein Befestigungsansatz 6.1 des Pflugtragkörpers 6 formschlüssig eingesteckt ist. Mit 12 ist eine Klebefläche an der Kontaktfläche zwischen dem Anschlussteil 10 und dem Einzelstreichblechstreifen 2.1 angedeutet, so dass das Anschlussteil 10 ohne das Vorsehen sonstiger Schraubelemente und dergleichen Befestigungsmittel vollflächig an seiner unteren Kontaktfläche mit dem Einzelstreichblechstreifen 2.1 zu verkleben ist. Das Anschlussteil 10 und damit der Einzelstreichblechstreifen 2.1 ist über die Schraubverbindung 13 des Streichblechvorderteils in der Ausnehmung zu sichern. Diese Schraubverbindung 13 befestigt das Streichblechvorderteil 4 an dem Pflugtragkörper 6, so dass der Pflugtragkörper darüber auch in der Ausnehmung 11 des Anschlussteiles 10 festgelegt ist, da das Streichblechvorderteil 4 wie aus Fig. 1 ersichtlich in der Ausnehmung 3 des Streichblechhinterteils (Einzelstreichblechstreifen 2.1) angeordnet ist. Der Einzelstreichblechstreifen 2.1 ist über eine weitere Schraubverbindung 14 zusätzlich an dem Pflugtragkörper 6 zu befestigen, so dass über diese Befestigungsschrauben 13 und 14 die sichere Festlegung an dem Pflugtragkörper 6 durch lösbare Verbindungsschrauben sichergestellt ist. Die durch das Anschlussteil 10 dargestellte Steckschnellverbindung realisiert ein sicheres Halten des vorderen Bereiches des Einzelstreichblechstreifens 2.1 am Pflugtragkörper 6.

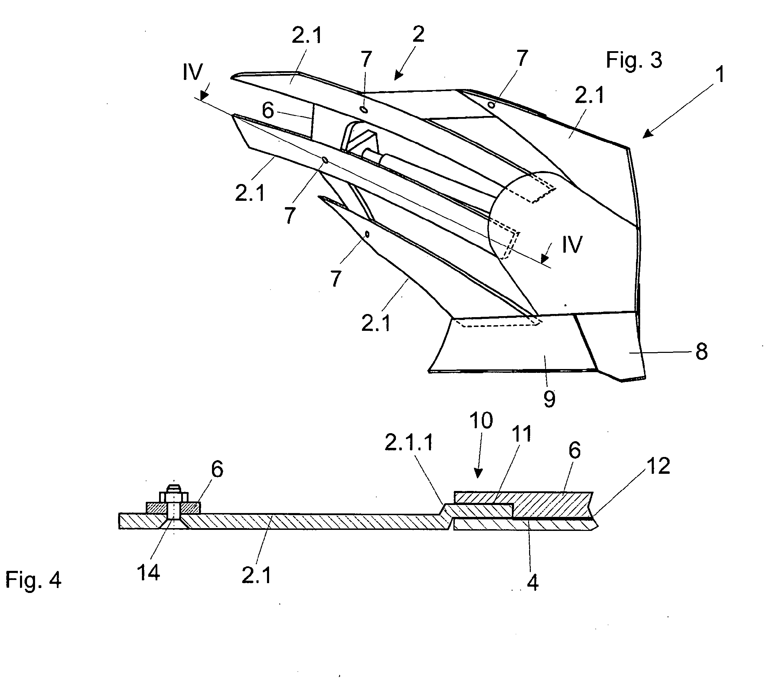

Bei grundsätzlich übereinstimmendem Aufbau zeigen die Fig. 3 und 4 eine alternative Ausführungsvariante, bei der das vordere Streichblechteil 4 und der Pflugtragkörper 6 ihrerseits bereits das Anschlussteil 10 mit der Ausnehmung 11 bilden. Hier hat der Pflugtragkörper 6 eine zu dem Einzelstreichblechstreifen 2.1 hin offene Ausnehmung 11, die nach unten von dem Streichblechvorderteil 4 abgedeckt wird. In Fig. 4 ist mit 12 angedeutet, dass das Streichblechvorderteil 4 und der Pflugtragkörper 6 miteinander verklebt sind.

Der Einzelstreichblechstreifen 2.1 ist abgekröpft ausgebildet und greift mit seinem der Schraubverbindung 14 abgewandten Ende in die durch das Streichblechvorderteil 4 und den Pflugtragkörper 6 gebildete Ausnehmung 11 ein, so dass diese das Anschlussteil 10 bilden. Durch die Schraubverbindung 14 und die Klebeschicht 12 ist damit die Verbindung in der Ausnehmung 11 gesichert, so dass diese werkzeuglos dargestellt werden kann.

Allen diesen Ausgestaltungen der Befestigung des Streichbleches 2 oder der Einzelstreichblechstreifen 2.1 ist gemeinsam, dass die Befestigungselemente für den vorderen harten Bereich des Streichbleches 2 oder Einzelstreichblechstreifen 2.1, welcher einem erhöhten Verschleiß unterliegt, formelementefrei dem Streichblech oder den Einzelstreichblechstreifen zugeordnet sind, während dem hinteren, weicheren Bereich des Streichbleches 2 oder der Einzelstreichblechstreifen 2.1, welcher einem geringeren Verschleiß unterliegt, mittels das Streichblech 2 oder die Einzelstreichblechstreifen 2.1 durchdringende Formelemente zur Befestigung am Pflugkörper zugeordnet sind.

## Patentansprüche

1. Pflugkörper (1) mit einem Streichblech (2) in Vollkörper- oder in Streifenkörperausbildung (2.1), das an einem Pflugtragkörper (6) über zumindest zwei Befestigungselement gehaltert ist, wobei die Befestigungselemente zumindest ein mit dem Pflugtragkörper verbindbares Anschlussteil (10) aufweisen, wobei zumindest eines Anschlussteil (10) aufweisende Befestigungselement als Schnellbefestigungselement mit einer Aufnahme (11) zur formschlüssigen Halterung eines Befestigungsansatzes (6.1) des Pflugtragkörpers (6) und/oder eines Befestigungsansatzes (2.1.1) des Streichbleches (2) ausgebildet und formelementefrei an dem Streichblech (2) angeordnet ist, **dadurch gekennzeichnet, dass** das Streichblech (2, 2.1) in einen dem formelementefreien Anschlussteil (10) entfernten Bereich mittels einer lösbaren und das Streichblech (2, 2.1) durchgreifenden Befestigung (14) an dem Pflugtragkörper (6) zusätzlich festgelegt ist.

2. Pflugkörper nach Anspruch 1, **dadurch gekennzeichnet, dass** das Anschlussteil (10) des Befestigungselementes als Befestigungsschuh ausgebildet ist, in den der Befestigungsansatz (6.1) des Pflugtragkörpers (6) einsteckbar ist.

3. Pflugkörper nach Anspruch 2, **dadurch gekennzeichnet, dass** das Anschlussteil (10) des Befestigungselementes im Querschnitt im Wesentlichen U-förmig ausgebildet ist.

4. Pflugkörper nach einem der Ansprüche 1 bis 3, **dadurch gekennzeichnet, dass** das Anschlussteil (10) mit dem Streichblech (2, 2.1) verklebt ist.

5. Pflugkörper nach einem der Ansprüche 1 bis 3, **dadurch gekennzeichnet, dass** das Anschlussteil (10) an das Streichblech (2, 2.1) angeformt ist.

6. Pflugkörper mit einem Streichblech (2, 2.1), das ein Streichblechhinterteil (2, 2.1) und ein als auswechselbares Verschleißteil ausgebildetes Streichblechvorderteil (4) aufweist, nach einem der Ansprüche 1 bis 5, **dadurch gekennzeichnet, dass** das Streichblechvorderteil (4) über eine lösbare Verbindung an dem Befestigungs-ansatz (6.1) des Pflugtragkörpers (6) und das Anschlussteil (10) an dem Streichblechhinterteil (2, 2.1) festgelegt ist, wobei der Befestigungsansatz (6.1) des Pflugtragkörpers (6) in dem Anschlussteil (10) über die lösbare Verbindung (13) des Streichblechvorderteils (4) am Pflugtragkörper (6) gesichert ist.

7. Pflugkörper nach Anspruch 6, **dadurch gekennzeichnet, dass** die lösbare Verbindung (13) des Streichblechvorderteils (4) an dem Befestigungsansatz (6.1) des Pflugtragkörpers (6) durch eine Schraubverbindung gebildet ist.

8. Pflugkörper nach Anspruch 1, **dadurch gekennzeichnet, dass** der Pflugtragkörper (6) bereichsweise als Anschlussteil (10) mit einer Aufnahme (11) für einen Befestigungsansatz (2.1.1) des Streichbleches (2.1) ausgebildet ist.

9. Pflugkörper nach Anspruch 8 mit einem Streichblech (2, 2.1), das ein Streichblechhinterteil (2, 2.1) und ein als auswechselbares Verschleißteil ausgebildetes Streichblechvorderteil (4) aufweist, **dadurch gekennzeichnet, dass** das Anschlussteil (10) gemeinsam durch den Pflugtragkörper (6) und das Streichblechvorderteil (4) gebildet ist mit einer zwischen diesen gelegenen Aufnahme (11), in die ein Befestigungsansatz (2, 2.1) des Streichbleches (2) formschlüssig einsteckbar ist.

10. Pflugkörper nach Anspruch 9, **dadurch gekennzeichnet, dass** der Pflugtragkörper (6) und das Streichblechvorderteil (4) miteinander verklebt sind.

11. Pflugkörper nach Anspruch 1, **dadurch gekennzeichnet, dass** die zusätzliche Befestigung (14) durch eine Schraubverbindung gebildet ist.

12. Pflugkörper nach einem der Ansprüche 1 bis 11, **dadurch gekennzeichnet, dass** das Streichblech (2, 2.1) in seinem das Anschlussteil (10) aufweisenden Bereich gegenüber einem hiervon entfernt gelegenen hinteren Bereich des Streichbleches (2, 2.1) härter ausgebildet ist.

## Claims

1. Plough bottom (1) having a mouldboard (2) configured as a solid body or as a slatted body (2.1), said mouldboard (2) being held on a plough supporting body (6) via at least two fastening elements, wherein the fastening elements have at least one connection part (10) that is connectable to the plough supporting body, wherein at least one fastening element having a connection part (10) is configured as a quick-action fastening element with a receptacle (11) for holding a fastening extension (6.1) of the plough supporting body (6) and/or a fastening extension (2.1.1) of the mouldboard (2) in a form-fitting manner and is arranged on the mouldboard (2) in a manner free of form elements, **characterized in that** the mouldboard (2, 2.1) is additionally fixed to the plough supporting body (6), in a region away from the connection part (10) free of form elements, by means of a releasable fastener (14) passing through the mouldboard (2, 2.1).

2. Plough bottom according to Claim 1, **characterized in that** the connection part (10) of the fastening element is configured as a fastening shoe into which the fastening extension (6.1) of the plough supporting body (6) is pluggable.

3. Plough bottom according to Claim 2, **characterized in that** the connection part (10) of the fastening element is configured in a substantially U-shaped manner in cross section.

4. Plough bottom according to one of Claims 1 to 3, **characterized in that** the connection part (10) is adhesively bonded to the mouldboard (2, 2.1).

5. Plough bottom according to one of Claims 1 to 3, **characterized in that** the connection part (10) is integrally formed on the mouldboard (2, 2.1).

6. Plough bottom having a mouldboard (2, 2.1), which has a mouldboard rear part (2, 2.1) and a mouldboard front part (4) configured as an exchangeable wearing part, according to one of Claims 1 to 5, **characterized in that** the mouldboard front part (4) is fixed to the fastening extension (6.1) of the plough supporting body via a releasable connection and the connection part (10) is fixed to the mouldboard rear part (2, 2.1), wherein the fastening extension (6.1) of the plough supporting body (6) is secured to the plough supporting body (6) in the connection part (10) via the releasable connection (13) of the mouldboard front part (4).

7. Plough bottom according to Claim 6, **characterized in that** the releasable connection (13) of the mouldboard front part (4) to the fastening extension (6.1) of the plough supporting body (6) is formed by a screw connection.

8. Plough bottom according to Claim 1, **characterized in that** the plough supporting body (6) is configured regionally as a connection part (10) having a receptacle (11) for a fastening extension (2.1.1) of the mouldboard (2.1).

9. Plough bottom according to Claim 8, having a mouldboard (2, 2.1), which has a mouldboard rear part (2, 2.1) and a mouldboard front part (4) configured as an exchangeable wearing part, **characterized in that** the connection part (10) is formed jointly by the plough supporting body (6) and the mouldboard front part (4), with a receptacle (11), located therebetween, into which a fastening extension (2, 2.1) of the mouldboard (2) is pluggable in a form-fitting manner.

10. Plough bottom according to Claim 9, **characterized in that** the plough supporting body (6) and the mouldboard front part (4) are adhesively bonded to one another.

11. Plough bottom according to Claim 1, **characterized in that** the additional fastener (14) is formed by a screw connection.

12. Plough bottom according to one of Claims 1 to 11, **characterized in that** the mouldboard (2, 2.1) is configured in a harder manner in its region having the connection part (10) compared with a rear region, located away therefrom, of the mouldboard (2, 2.1).

## Revendications

1. Corps de charrue (1) avec un versoir de charrue (2) en modèle à corps plein ou à corps en bandes (2.1), qui est supporté sur un corps de support de charrue (6) par au moins deux éléments de fixation, dans lequel les éléments de fixation présentent au moins une pièce de liaison (10) à assembler au corps de support de charrue, dans lequel au moins un élément de fixation présentant une pièce de liaison (10) est réalisé sous forme d'élément de fixation rapide avec un logement (11) pour le support par emboîtement d'une pièce de fixation (6.1) du corps de support de charrue (6) et/ou d'une pièce de fixation (2.1.1) du versoir de charrue (2) et est disposé sans élément de forme sur le versoir de charrue (2), **caractérisé en ce que** le versoir de charrue (2, 2.1) est en outre fixé au corps de support de charrue (6), dans une région éloignée de la pièce de liaison sans élément de forme (10), au moyen d'une fixation (14) détachable et traversant le versoir de charrue (2, 2.1).

2. Corps de charrue selon la revendication 1, **caractérisé en ce que** la pièce de liaison (10) de l'élément de fixation est réalisée sous forme de soulier de fixation, dans lequel la pièce de fixation (6.1) du corps de support de charrue (6) peut être insérée.

3. Corps de charrue selon la revendication 2, **caractérisé en ce que** la pièce de liaison (10) de l'élément de fixation est réalisée essentiellement en forme de U en section transversale.

4. Corps de charrue selon l'une quelconque des revendications 1 à 3, **caractérisé en ce que** la pièce de liaison (10) est collée au versoir de charrue (2, 2.1).

5. Corps de charrue selon l'une quelconque des revendications 1 à 3, **caractérisé en ce que** la pièce de liaison (10) est formée sur le versoir de charrue (2, 2.1).

6. Corps de charrue avec un versoir de charrue (2, 2.1), qui présente une partie arrière de versoir de charrue (2, 2.1) et une partie avant de versoir de charrue (4) constituant une pièce d'usure remplaçable, selon l'une quelconque des revendications 1 à 5, **caractérisé en ce que** la partie avant de versoir de charrue (4) est attachée à la pièce de fixation (6.1) du corps de support de charrue (6) par une liaison détachable et la pièce de liaison (10) est attachée à la partie arrière de versoir de charrue (2, 2.1), dans lequel la pièce de fixation (6.1) du corps de support de charrue (6) est calée dans la pièce de liaison (10) par la liaison détachable (13) de la partie avant de versoir de charrue (4) au corps de support de charrue (6).

7. Corps de charrue selon la revendication 6, **caractérisé en ce que** la liaison détachable (13) de la partie avant de versoir de charrue (4) à la pièce de fixation (6.1) du corps de support de charrue (6) est formée par un assemblage vissé.

8. Corps de charrue selon la revendication 1, **caractérisé en ce que** le corps de support de charrue (6) est réalisé localement comme pièce de liaison (10) avec un logement (11) pour une pièce de fixation (2.1.1) du versoir de charrue (2.1).

9. Corps de charrue selon la revendication 8 avec un versoir de charrue (2, 2.1), qui présente une partie arrière de versoir de charrue (2, 2.1) et une partie avant de versoir de charrue (4) constituant une pièce d'usure remplaçable, **caractérisé en ce que** la pièce de liaison (10) est formée en commun par le corps de support de charrue (6) et la partie avant de versoir de charrue (4) avec un logement (11) situé entre ceux-ci, dans lequel une pièce de fixation (2, 2.1) du versoir de charrue (2) peut être insérée par emboîtement.

10. Corps de charrue selon la revendication 9, **caractérisé en ce que** le corps de support de charrue (6) et la partie avant de versoir de charrue (4) sont collés l'un à l'autre.

11. Corps de charrue selon la revendication 1, **caractérisé en ce que** la fixation supplémentaire (14) est formée par un assemblage vissé.

12. Corps de charrue selon l'une quelconque des revendications 1 à 11, **caractérisé en ce que** le versoir de charrue (2, 2.1) est réalisé avec une dureté plus élevée dans sa région présentant la pièce de liaison (10) par rapport à une région arrière du versoir de charrue (2, 2.1) située à distance de celle-ci.
